# EUROPEAN PATENT APPLICATION

(11) **EP 2 535 846 A1**
(43) Date of publication of application: **19.12.2012**
(21) Application number: 10845468.7
(22) Date of filing: 10.02.2010
(51) Int. Cl.: G06K 19/07, G11C 16/00

(54) **METHOD AND APPARATUS FOR PARTITIONING SD CARD, SD CARD AND TERMINAL DEVICES**

(71) Applicant: Huawei Device Co., Ltd., Shenzhen, Guangdong 518129 (CN)
(72) Inventor: QIN, Wei, Shenzhen Guangdong 518129 (CN); YI, Tao, Shenzhen Guangdong 518129 (CN); WANG, Yuhua, Shenzhen Guangdong 518129 (CN)
(74) Representative: Goddar, Heinz J.
(86) International application number: PCT/CN2010/070605
(87) International publication number: WO 2011/097794

(57) **Abstract**

The present invention relates to an SD card partitioning method and apparatus, an SD card, and a terminal device, and pertains to the terminal field. The method includes: creating a management information partition in a storage area of an SD card, and setting an access attribute of the management information partition to a hidden attribute; dividing the remaining storage area into at least two data partitions; setting an access attribute of at least one of the data partitions to a read-only attribute; setting access attributes of the remaining data partitions to full-access attributes, and setting the size of the data partitions with the full-access attributes as a storage capacity for use by a user of the SD card; storing partition information of the SD card in the management information partition, where the partition information includes: the number of partitions, a size and a start address of each partition, and the access attribute of each partition. The present invention also provides a partitioning apparatus, an SD card, and a terminal device. The method may create the partitions with different access attributes in the storage area of one SD card to accommodate different applications, therefore making it more convenient to use the SD card.

## Description

### FIELD OF THE INVENTION

The present invention relates to the terminal field, and in particular, to an SD card partitioning method and apparatus, an SD card, and a terminal device.

### BACKGROUND OF THE INVENTION

Currently, 3G data card products generally have an SD card (an SD card is a Secure Digital Card - secure digital card) storage extension function. With an extended SD card connected to an SD card interface, a user can easily save information such as file data and music files while surfing the Internet. For a common user, a common SD card storage function can meet the use need. However, 3G data card products are generally bound to the services of operators, and the operators need to create some privileged areas on the SD cards for saving software or data relating to the operators. These areas need to meet the following features: (1) the size of a storage area may be adjusted dynamically upon authorization; (2) the attribute of a storage area may be modified (such as the read-only data hidden attribute); and (3) a special storage area is visible only on a corresponding data card and is invisible on a common card reader. To meet the above needs, the operators need to dynamically divide the space of an SD card and create a read-only area in the space. Some software is implanted into the read-only area, and relevant services may be carried out through the implanted software.

In the prior art, if it is intended to set a read-only partition in an SD card and implant software, generally the manufacturer of the SD card completes the setting and implantation. After the software is implanted into the SD card during the manufacture, a special instrument is used to set the attribute of the whole SD card to read-only, and the read-only attribute of the SD card cannot be changed after the SD card leaves the factory.

As can be seen from the above description of the conventional SD card partitioning method, the prior art has at least the following problems:
The implantation of software into an SD card for carrying out services relies on the manufacturer of the SD card, and the whole storage area of the SD card for implanting the software can only be set to read-only and the SD card set to read-only cannot be changed after leaving the factory, so that partitions having different access attributes cannot be created in the storage area of the SD card by using the conventional SD card partitioning method to accommodate different applications.

### SUMMARY OF THE INVENTION

Embodiments of the present invention provide an SD card partitioning method and apparatus, an SD card, and a terminal device, which can solve the problem that for a conventional SD card applied to a terminal device, partitions having different access attributes cannot be created in a storage area of the SD card to accommodate different applications.

The embodiments of the present invention are implemented through the following technical solutions:
An embodiment of the present invention provides an SD card partitioning method, including:
   creating a management information partition in a storage area of an SD card, and setting an access attribute of the management information partition to a hidden attribute;
   dividing a remaining storage area into at least two data partitions; setting an access attribute of at least one of the data partitions to a read-only attribute; setting an access attribute of the remaining data partition to a full-access attribute, and using a size of the data partition with the full-access attribute as a storage capacity for use by a user of the SD card; and
   storing partition information of the SD card in the management information partition, where the partition information includes: the number of partitions, a size and a start address of each partition, and an access attribute of each partition.

An embodiment of the present invention also provides an SD card partitioning apparatus, including:
a capacity querying unit, a partition parameter setting unit, a partition parameter receiving unit, and a partitioning unit, wherein:
   the capacity querying unit is configured to query a capacity size of a processed SD card;
   the partition parameter setting unit is configured to set, according to the capacity of the processed SD card that is obtained by the capacity querying unit, parameters of partitions to be created on the processed SD card, where the parameters of the partitions include: a capacity of an information management partition and capacities of at least two data partitions; or a capacity and an access attribute of an information management partition and capacities of at least two data partitions and an access attribute of each of the data partitions;
   the partition parameter receiving unit is configured to receive the parameters that are of the partitions to be created and are set by the partition parameter setting unit for the processed SD card; and
   the partitioning unit is configured to partition the processed SD card according to the parameters that are of the partitions to be created and are received by the partition parameter receiving unit, create the management information partition in a storage area of the processed SD card, and set the access attribute of the management information partition to a hidden attribute; create at least two data partitions in the remaining storage area according to the set capacities; set an access attribute of at least one of the data partitions to a read-only attribute; set an access attribute of the remaining data partition to a full-access attribute, and set the size of the data partition with the full-access attribute as a storage capacity for use by a user of the SD card; and store partition information of the SD card into the management information partition, where the partition information includes: the number of partitions, a size and a start address of each partition, and an access attribute of each partition.

An embodiment of the present invention also provides an SD card, wherein a management information partition with an access attribute being a hidden attribute is created in a storage area of the SD card, and the remaining storage area exclusive of the management information partition is divided into at least two data partitions according to set capacities; an access attribute of at least one of the data partitions is a read-only attribute; an access attribute of the remaining data partition is a full-access attribute, and a size of the data partition with full-access attribute is used as a storage capacity for use by a user of the SD card; and the management information partition stores partition information of the SD card, where the partition information includes: the number of partitions, a size and a start address of each partition, and an access attribute of each partition.

An embodiment of the present invention further provides a terminal device, including a communication unit and an SD card interface, and further including:
a partition parameter receiving unit and a partitioning unit, where:
   the partition parameter receiving unit is configured to receive parameters for partitioning an SD card connected to the SD card interface, where the parameters include: a capacity of an information management partition and capacities of at least two data partitions; or a capacity and an access attribute of an information management partition, and capacities of at least two data partitions and an access attribute of each of the data partitions; and
   the partitioning unit is configured to partition the processed SD card according to the parameters that are of the partitions to be created and are received by the partition parameter receiving unit, create the management information partition in a storage area of the processed SD card, and set the access attribute of the management information partition to a hidden attribute; create at least two data partitions in the remaining storage area according to the set capacities; set an access attribute of at least one of the data partitions to a read-only attribute; set an access attribute of the remaining data partition to a full-access attribute, and set a size of the data partition with the full-access attribute as a storage capacity for use by a user of the SD card; and store partition information of the SD card into the management information partition, where the partition information includes: the number of partitions, a size and a start address of each partition, and an access attribute of each partition.

An embodiment of the present invention still further provides a terminal device, including a communication unit and an SD card interface, and further including:
a capacity querying unit, a partition parameter setting unit, a partition parameter receiving unit, and a partitioning unit, where:
   the capacity querying unit is configured to query a capacity size of a processed SD card;
   the partition parameter setting unit is configured to set, according to the capacity of the processed SD card that is obtained by the capacity querying unit, parameters of partitions to be created on the processed SD card, where the parameters of the partitions include: a capacity of an information management partition and capacities of at least two data partitions; or a capacity and an access attribute of information management partition and capacities of at least two data partitions and an access attribute of each of the data partitions;
   the partition parameter receiving unit is configured to receive the parameters that are of the partitions to be created and are set by the partition parameter setting unit for the processed SD card; and
   the partitioning unit is configured to partition the processed SD card according to the parameters that are of the partitions to be created and are received by the partition parameter receiving unit, create the management information partition in a storage area of the processed SD card, and set the access attribute of management information partition to a hidden attribute; create at least two data partitions in the remaining storage area according to the set capacities; set an access attribute of at least one of the data partitions to a read-only attribute; set an access attribute of the remaining data partition to a full-access attribute, and set a size of the data partition with the full-access attribute as a storage capacity for use by a user of the SD card; and store partition information of the SD card into the management information partition, where the partition information includes: the number of partitions, a size and a start address of each partition, and an access attribute of each partition.

According to the technical solutions of the embodiments of the present invention, a management information partition is created in the partitioning of the SD card, and the access attribute of this partition is set to hidden; the hidden management information partition is used to store the partition information of the SD card, and further, the remaining storage area of the SD card may be divided into the data partitions with read-only attributes and the data partitions with full-access attributes, and the partition information is stored in the management information partition, so that the storage area of one SD card may be divided into partitions with different access attributes, therefore achieving the objective of using partitions with different access attributes to accommodate different applications, making it more convenient to use the SD card, and facilitating the implantation of software for carrying out services on the SD card.

### BRIEF DESCRIPTION OF THE DRAWINGS

FIG. 1 is a schematic flowchart of an SD card partitioning method according to a first embodiment of the present invention;
FIG. 2 is a schematic diagram of the partitions of the SD card according to the first embodiment of the present invention;
FIG. 3 is a flowchart of a partitioning method according to the first embodiment of the present invention;
FIG. 4 is a block diagram of a structure of an SD card partitioning apparatus according to a second embodiment of the present invention;
FIG. 5 is a block diagram of a structure of a terminal device according to a fourth embodiment of the present invention; and
FIG 6 is a block diagram of a structure of a terminal device according to a fifth embodiment of the present invention.

### DETAILED DESCRIPTION OF THE EMBODIMENTS

The present invention is hereinafter further described with reference to the accompanying drawings and the specific embodiments.

### Embodiment 1

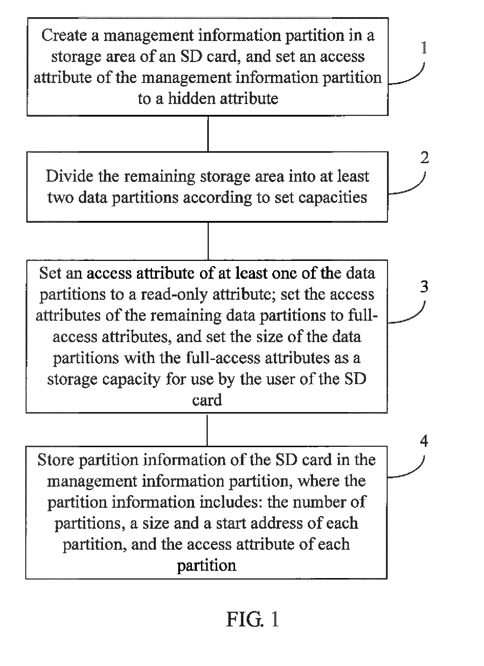

The first embodiment provides an SD card partitioning method, which can partition the SD cards that are used as data storage apparatuses in various terminal devices, for example, partition the SD cards used in terminal devices such as data cards, palmtop computers, mobile phones, and gaming machines. FIG 1 is a schematic flowchart of the SD card partitioning method, including the following steps:
Step 1: Create a management information partition in a storage area of an SD card, and set an access attribute of the management information partition to a hidden attribute.

Specifically, a storage partition may be created at the rear end of the storage area of the SD card (that is, a storage partition specified at the tail end of storage addresses of the storage area) as the management information partition according to a set capacity, and the partition is set to be an invisible hidden partition, for example, a hidden identifier may be set in the identifier part of the partition. When an external device (such as a PC) is used to read the SD card, the reading of the partition is skipped when the hidden identifier is encountered, so that the hiding of the management information partition is implemented.
Step 2: Divide the remaining storage area into at least two data partitions according to set capacities.

Specifically, at least two storage partitions may be created in the storage area between the front end of the storage area of the SD card (at the front end of storage addresses of the storage area) and the management information partition as data partitions.
Step 3: Set an access attribute of at least one of the data partitions to a read-only attribute; set the access attributes of the remaining data partitions to full-access attributes, and set the size of the data partitions with the full-access attributes as a storage capacity for use by the user of the SD card.

Setting the access attribute of at least one of the data partitions to the read-only attribute in step 3 may be setting the access attribute of at least one storage partition adjacent to the management information partition among the storage partitions to the read-only attribute, and the storage partition with the read-only attribute may serve as a partition for storing system data; and when a common card reader is used to read the SD card, a partition with a read-only attribute may be invisible.

Setting the access attributes of the remaining data partitions to full-access attributes and setting the size of the data partitions with the full-access attributes as the storage capacity for use by the user of the SD card in step 3 may be setting the access attributes of the storage partitions, other than the read-only storage partitions and the information management partition, among the storage partitions of the SD card to full-access attributes, the storage partitions with full-access attributes serve as user data partitions, and the size of the user data partitions is set as the storage capacity that is available for use by the user of the SD card. When a common card reader is used to read the SD card, the storage partitions with full-access attributes may be visible partitions and may serve as available storage partitions of the SD card.
Step 4: Store partition information of the SD card in the management information partition, where the partition information includes: the number of partitions, a size and a start address of each partition, and the access attribute of each partition.

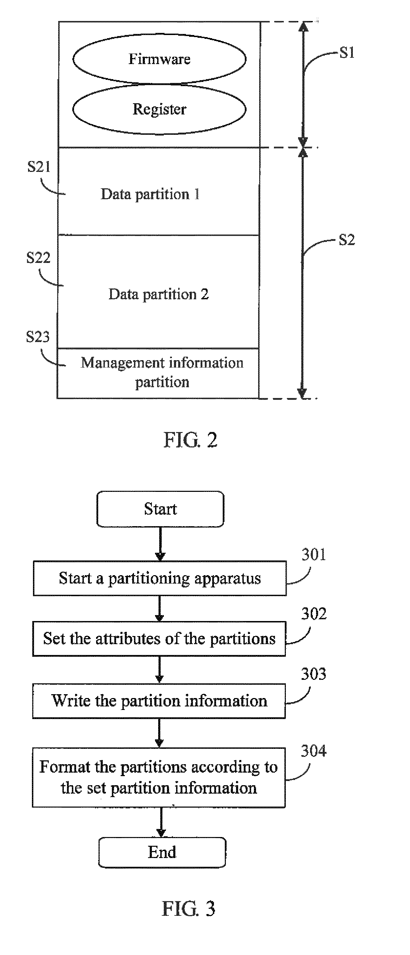

FIG. 2 is a schematic structural diagram of partitions of an SD card. The foregoing partitioning method is hereinafter described in further detail by taking a procedure for partitioning an SD card as an example:
In FIG. 2, S1 is marked as an internal management partition of the SD card, which is used for storing firmware and registration information of the SD card, the information has been written into the SD card when the SD card leaves the factory, and the partition is a partition that a user cannot change and is invisible to the user; the partitions marked as S2 are data partitions of the SD card (namely, available storage partitions of the SD card), which are storage partitions that the user can use, the partitioning method of this embodiment of the present invention is executed for this part of partitions, and after the partitioning, this part is divided into a data partition 1 S21, a data partition 2 S22, a management information partition S23. The specific partitioning procedure is as follows:
   creating a management information partition at the rear-end storage area of the SD card (at the tail end of storage addresses of the storage area), which is used for storing partition information, where the partition information includes the following content: (1) the number of partitions; (2) a size and a start address of each partition; and (3) an access attribute of each partition; the access attribute of the management information partition may be set to a hidden attribute, so that when a common card reader is used to read the SD card, the management information partition with the hidden attribute may be invisible; and the management information partition with the hidden attribute may be read or adjusted only by a corresponding terminal device or a partitioning tool;
   dividing the storage area exclusive of the management information partition into at least two partitions as data partitions, for example, two data partitions (data partition 1 S21 and data partition 2 S22), where the first data partition 1 serves as a user partition, and the access attribute of the data partition 1 is set to a full-access attribute, so that a common user may have the right to full-access to the data partition 1 and can write or delete data into or from the data partition 1 at will; and the size of the data partition 1 is set to be the storage capacity of the SD card, so that when a common SD card reader is used to read the SD card after the partitioning, only the size of the storage capacity of the data partition 1 can be identified;
   creating a data partition 2 in the storage area between the data partition 1 and the management information partition, where the data partition 2 may serve as a system partition, and the access attribute of the data partition 2 is set to a read-only attribute, so that a common user may only have the right to read-only access to the data partition 2, that is, the user may read the pre-stored data (such as software for carrying out services) from the data partition 2, but cannot write or delete data into or from this data partition; the data partition 2 may be used for storing implanted software for carrying out services, and because this data partition only has a read-only attribute, the implanted software is not damaged by an operation of the common user.

The foregoing method may be used to partition the SD card in the following method. A specific processing procedure is shown in FIG. 3:
Step 301: Firstly start a partitioning apparatus, and query multiple volume labels of the SD card through the partitioning apparatus.
Step 302: Set information of each partition according to the queried volume labels.
Step 303: Write the set information of each partition into a management information partition of the SD card.
Step 304: Format the SD card according to the set partition information to create partitions on the SD card.

In the processing of the foregoing method, firstly the SD card is connected to a computer through a terminal device. The computer has a partitioning apparatus, and the SD card may be partitioned through the partitioning apparatus. An enable control flag NV of the SD card is checked to confirm whether it is allowed to partition the SD card. If the enable control flag NV is in an enabled state, it is determined that the SD card may be partitioned.

Because a common micro SD card on the market does not support multiple physical partitions, in order to virtualize the SD card to multiple SD cards, multiple volume labels (LUNs) may be set on the SD card, and at the time of partitioning, the multiple volume labels (LUNs) on the SD card are queried firstly, and then the layout of SD data partitions is re-planned according to the multiple volume labels (LUNs) and the relevant information such as the capacity and attribute of each partition of the SD card is set as required.

To implement the foregoing function, the following implementation may specifically be adopted.
(a) Querying the SD card to obtain multiple LUNs:
   As specified in a USB mass storage protocol, a HOST may query the number of logical volumes of the SD card by delivering a Get_Max_Lun command to obtain the volume labels (LUNs) of the logical volumes.
(b) SD card partition layout:
   After obtaining the multiple volume labels (LUNs) of the SD card, the capacity of the SD card is divided in the next step and specific physical operation areas are set for each LUN. With the circumstance shown in FIG. 2 as an example, the SD card may be divided into multiple data partitions and one management information partition.

The data partitions are used for storing data, each LUN corresponds to only one data partition, and the data partitions may be consecutive storage partitions on the SD card.

The management information partition is used for storing the partition information of the SD card, one SD card may have only one management information partition, and the specific structure of the management information partition is hereinafter described.
(I) Implementation of the management information partition in the SD card partitioning:
(a) Location at which the partition management information is stored:
In the SD card partition layout as shown in FIG. 2, the management information partition is located at the rearmost end of the storage area of the SD card, and generally, the last several sectors in the storage area serve as the management information partition for storing the partition information.

(b) A magic number of a partition information table:
In order to judge whether the management information partition is valid, a magic number may be used for making the judgement;

(c) The data structure of the management information partition:
The data structure of the management information partition may be the following structure:

   ```
          Typedef Struct
          {
            Uint32 magic_number; /*the magic number of the partition table*/
            Uint32 version; /*the version number of the partition table*/
            Uint32 count; /*the number of entries of the partition table*/
            sd_info_tab_entry table_entries[SD_MAX_PARTITION_NUM]; /*the entry
            information of the partition table*/
            Uint32 crc_verify;
          }sd_info_tab;
```

The identifiers in the foregoing data structure are described in the following table:

| Name | Type | Description |
|---|---|---|
| magic_number | Uint32 | The magic number of the partition table. If the magic number is displaced, it indicates that the SD card has been set. |
| version | Uint32 | The version number of the partition table. The first version number is 0. If the partition table is updated, the version number will be increased sequentially, such as 2, 3. |
| count | Uint32 | The number of entries of the partition table. |
| sd_info_tab_entry table_entries[SD_MAX_PAR TITION_NUM] | Uint32 | The entry information of the partition table. |
| ere_verify | Uint32 | CRC check digit. If the verification succeeds, the partition information is reported according to the partition, information table. |

The entry structure of the partition table of the management information partition is:

```
          Typedef Struct
          {
            Uint32 number;
            Uint32 size;
            Uint32 attribute;
            Uint32 Reserved;
            Uint32 Reserved2;
          }sd_info_tab_entry;
```

The identifiers in the foregoing entry structure of the partition table of the management information partition are described in the following table:

| Name | Type | Description |
|---|---|---|
| Number | Uint32 | Indicates which specific partition. |
| Size | Uint32 | The capacity size of the partition. |
| attribute | Uint32 | Bitmap attribute field for setting a partition attribute, such as |
| | | read-only. |
| Reserved1 | Uint32 | Reserved field 1 for future extension. |
| Reserved2 | Uint32 | Reserved field 2 for future extension. |

(II) Implementation of the read-only partitions in the SD card partitions:
(a) Querying the read-only attribute of a partition:
   An SCSI command "mode sense" may be used to query whether a partition has a read-only attribute.
(b) Processing a write command:
   For all write commands sent to a read-only partition, stall is returned, indicating that writing is not supporter.

In practice, the operation on an SD card partition may be implemented by adding an AT command.

It may be understood that the foregoing actual processing procedure for partitioning the SD card is only an implementation way, and other implementation ways may also be adopted without departing from the idea of the present invention. Therefore, the present invention is not limited because of the foregoing specific partitioning method.

In the SD card partitioning method according to this embodiment, a management information partition is created in the partitioning of the SD card, and the access attribute of this partition is set to hidden; the hidden management information partition is used to store the partition information of the SD card, and further, the remaining storage area of the SD card may be divided into data partitions with read-only attributes and data partitions with full-access attributes. Therefore, the storage area of the SD card may be divided into partitions with different access attributes, therefore achieving the objective of using partitions with different access attributes to accommodate different applications, making it more convenient to use the SD card, and facilitating the implantation of software for carrying out services on the SD card.

### Embodiment 2

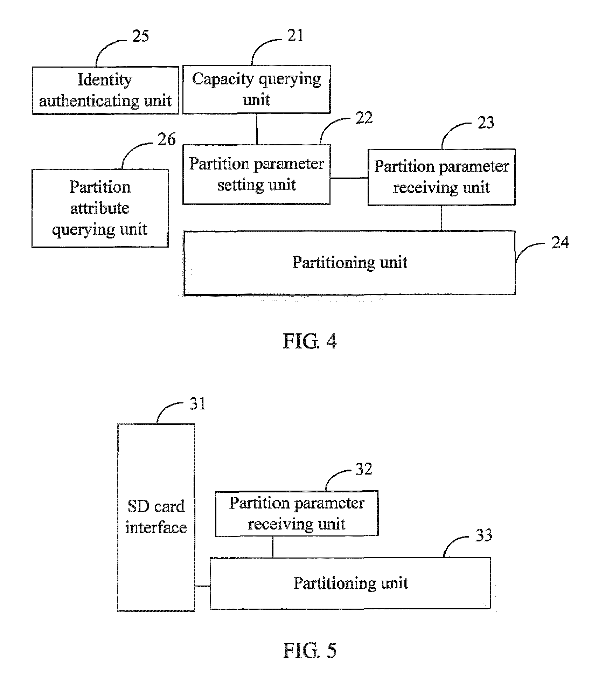

The second embodiment provides an SD card partitioning apparatus, which may be used to partition an SD card so that multiple partitions with different access attributes are created on the SD card. As shown in FIG. 4, which is a block diagram of a structure of the SD card partitioning apparatus, the apparatus specifically includes:
a capacity querying unit 21, a partition parameter setting unit 22, a partition parameter receiving and setting unit 23, and a partitioning unit 24.

The capacity querying unit 21 is configured to query a capacity size af a processed SD card.

The partition parameter setting unit 22 is configured to set, according to the capacity of the processed SD card that is obtained by the capacity querying unit 21, parameters of partitions to be created on the processed SD card, where the parameters of the partitions include: a capacity of an information management partition and capacities of at least two data partitions; or a capacity and an access attribute of an information management partition and capacities of at least two data partitions and an access attribute of each af the data partitions.

The partition parameter receiving unit 23 is configured to receive the parameters that are of the partitions to be created and are set by the partition parameter setting unit 22 for the processed SD card.

The partitioning unit 24 is configured to partition the storage area of the processed SD card according to the parameters that are of the partitions to be created and are received by the partition parameter receiving unit, create the management information partition in the storage area of the SD card, and set the access attribute of the management information partition to a hidden attribute; divide the remaining storage area into at least two data partitions according to the set capacities; set the access attribute of at least one of the data partitions to a read-only attribute; set the access attributes of the remaining data partitions to full-access attributes, and set the size of the data partitions with the fall-access attributes as a storage capacity for use by the user of the SD card; and store partition information of the SD card into the management information partition, where the partition information includes: the number of partitions, a size and a start address of each partition, and the access attribute of each partition.

If only the capacity of each partition is set in the received partition parameters, the partitioning unit 24 creates, when partitioning the processed SD card, the partition according to the specified partition capacity and sets the access attribute of the partition to default, for example, the access attribute of the management information partition is set to a hidden attribute by default, the access attributes of the data partitions storing system data are set to read-only attributes by default, and other partitions are set with a full-access attribute by default.

The partitioning apparatus may also include:
an identity authenticating unit 25, configured to require a user to enter identity authentication information when the user uses the apparatus, where if the identity authentication information is the same, the user is allowed to use the apparatus, or else, the user is forbidden to use the apparatus.

The SD card partitioning apparatus may also include:
a partition attribute querying unit 26, configured to query an original attribute of a partition of the processed SD card.

The SD card partitioning apparatus according to this embodiment may create storage partitions with different access attributes in the storage area of one SD card, therefore achieving the objective of using partitions with different access attributes to accommodate different applications, making it more convenient to use the SD card, and facilitating the implantation of software for carrying out services on the SD card.

As can be known, the partitioning apparatus of this embodiment may be disposed in a computer or in a terminal device, for partitioning an SD card, and creating storage partitions with different access attributes on the SD card, therefore making it more convenient to use the SD card.

### Embodiment 3

The third embodiment provides an SD card, which may be used in a mobile terminal, such as a data card, a mobile phone, a palmtop computer, or a gaming machine. The structure of the storage area of the SD card is illustrated in FIG**.** 2. A management information partition with an access attribute being a hidden attribute is created in the storage area of the SD card, and the remaining storage area exclusive of the management information partition is divided into at least two data partitions according to set capacities. The access attributes of at least one data partitions are read-only attributes; the access attributes of other data partitions are full-access attributes, and the size of the data partitions with full-access attributes is used as the storage capacity for use by the user of the SD card; the management information partition stores the partition information of the SD card, where the partition information includes: the number of partitions, a size and a start address of each partition, and the access attribute of each partition.

The management information partition of the SD card may be a storage partition, which is located at the rear end of the storage area of the SD card and created according to the set capacity.

The data partitions whose access attributes are read-only attributes on the SD card may be at least one storage partition adjacent to the management information partition in the storage area of the SD card, and the storage partition is a system data partition.

The data partitions whose access attributes are full-access attributes on the SD card may be storage partitions whose start address is between the front end of the storage area of the SD card and the data partitions whose access attributes are read-only attributes. These storage partitions are user data partitions, and the size of the user data partitions serves as the storage capacity for use by the user of the SD card.

The creation of the storage partitions with different access attributes on the SD card according to this embodiment facilitates the implantation of software that is not allowed to be modified by the user and may ensure the use by the user of the SD card to store user data, therefore making it more convenient to use the SD card.

### Embodiment 4

The fourth embodiment provides a terminal device, including an SD card interface 31, and as shown in a block diagram of a structure of the terminal device in FIG. 5, the terminal device also includes:
a partition parameter receiving unit 32 and a partitioning unit 33.

The partition parameter receiving unit 32 is configured to receive parameters for partitioning an SD card connected to the SD card interface 31, where the parameters include: a capacity of an information management partition and capacities of at least two data partitions; or a capacity and an access attribute of an information management partition, and capacities of at least two data partitions and an access attribute of each of the data partitions.

The partitioning unit 33 is configured to partition, according to the parameters that are of the partitions to be created and are received by the partition parameter receiving unit 32, the processed SD card connected to the SD card interface 31, create the management information partition in the storage area of the SD card, and set the access attribute of the management information partition to a hidden attribute; divide the remaining storage area into at least two data partitions according to the set capacities; set the access attribute of at least one of the data partitions to a read-only attribute; set the access attributes of the remaining data partitions to full-access attributes, and set the size of the data partitions with full-access attributes as a storage capacity for use by the user of the SD card; and store partition information of the SD card into the management information partition, where the partition information includes: the number of partitions, a size and a start address of each partition, and the access attribute of each partition.

It may be understood that the terminal device of this embodiment may be a data card, a mobile phone, a palmtop computer, a gaming machine, a media player, and so on. The terminal device may partition, by using an external computer, the SD card disposed in the terminal device, and may partition the SD card according to the parameters of partitions sent from the computer, to create storage partitions with different access attributes in the storage area of the SD card, which may facilitate the implantation of software for carrying out services in the read-only partition and may also ensure that storage partitions are provided for the user on the partitioned SD card, therefore making it more convenient to use the SD card.

Further description is made hereinafter by taking a data card as an example of the terminal device:
The data card has an SD card, the data card is connected to the SD card through an SD card interface, and the data card is connected to a computer. A parameter receiving unit 32 of the data card receives parameters set by the computer for partitioning the SD card, such as a capacity size of each partition, an access attribute of each partition, and a start address of each partition; and a partitioning unit 33 in the data card partitions, according to the parameters for partitioning the SD card that are received by the parameter receiving unit 32, the SD card in the data card and sets the access attribute of each partition.

The information of the management information partition in the partitioned SD card can only be read by a data card or a terminal having a partition management function similar to the data card. When the SD card is inserted into a card reader of another type, only the content of the first partition (a partition with a full-access attribute) is visible on the connected computer, and other partitions are invisible.

When the data card is connected to the computer, the reading and identification of the SD card include the following aspects:
(1) The data card identifies and reports the content of the partitions of the SD card:
   (a) By reading the content in the management information partition of the SD card, the data card determines the current number of SD partitions and the access permission information of each partition.
   (b) The data card reports the number of partitions of the SD card to the computer through the SCSI protocol and the computer displays the corresponding storage volume.
   (c) The computer queries the access permission of each volume, the data card reports the access permission of each volume to the computer according to the content in the management information partition of the SD card, and the computer write-protects the partitions reported as read-only to prevent modification by the user. If the user forcibly modifies the partitions through the computer, the data card returns failure to all write commands for the read-only partitions of the SD card, so as to ensure the security of the data content in the read-only partitions.
(2) Special partition information is hidden from other card reading devices
   When the user formats the SD card through the data card, the data card changes the capacity of the SD card to the size of the user partitions. The user partitions are located at front-end addresses of the SD card. When other card readers are used to read the content of the SD card, only the user partitions (data partitions whose access attributes are full-access attributes) can be read, and other partitions (such as the information management partition and the read-only partition) are invisible when a common card reader is used for reading, therefore protecting the content in the other partitions in a hidden way.

### Embodiment 5

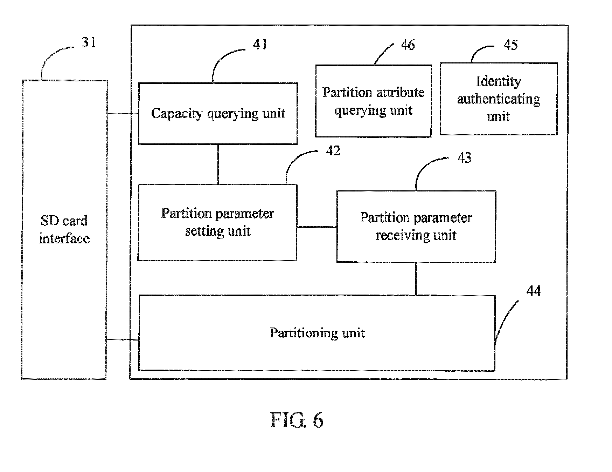

The fifth embodiment provides a terminal device, including an SD card interface 31, and as shown in a block diagram of a structure of the terminal device in FIG. 6, the terminal device also includes:
a capacity querying unit 41, a partition parameter setting unit 42, a partition parameter receiving unit 43, and a partitioning unit 44.

The capacity querying unit 41 is configured to query a capacity size of processes SD card.

The partition parameter setting unit 42 is configured to set, according to the capacity of the processed SD card that is obtained by the capacity querying unit 41, parameters of partitions to be created on the processed SD card, where the parameters of the partitions include: a capacity of an information management partition and capacities of at least two data partitions; or a capacity and an access attribute of an information management partition and capacities of at least two data partitions and an access attribute of each of the data partitions.

The partition parameter receiving unit 43 is configured to receive the parameters that are of the partitions to be created and are set by the partition parameter setting unit 42 for the processed SD card.

The partitioning unit 44 is configured to partition the processed SD card according to the parameters that are of the partitions to be created and are received by the partition parameter receiving unit 43, create the management information partition in the storage area of the processed SD card, and set the access attribute of the management information partition to a hidden attribute; create at least two data partitions in the remaining storage area according to the set capacities; set the access attribute of at least one of the data partitions to a read-only attribute; set the access attributes of the remaining data partitions to full-access attributes, and set the size of the data partitions with the full-access attributes as a storage capacity for use by a user of the SD card; and store partition information of the SD card into the management information partition, where the partition information includes: the number of partitions, a and a start address of each partition, and the access attribute of each partition.

The foregoing terminal device may also include: an identity authenticating unit 45, configured to require the user to identity authentication information when the user uses the apparatus, where if the identity authentication information is the same, the user is allow to use the apparatus, or else, the user is forbidden to use the apparatus.

The terminal device may also include:
a partition attribute querying unit 46, configured to query an original attribute of a partition of the process SD card.

It may be knows that the terminal device of this embodiment may be a mobile phone, a palmtop computer, a gaming machine, a media player, and so on. The terminal device may directly partition the SD card that is disposed in the terminal device, without connecting with an external computer, therefore having advantage of convenient use.

Persons of ordinary skill in the art may understand that all or part of steps in the methods of the above embodiments may be implemented by relevant hardware instructed by a program. The program may be stored in a computer readable storage medium, such as a ROM/RAM, a magnetic disk, and a CD-ROM.

Detailed above are only preferred embodiments of the present invention, but the scope of the present invention is not limited thereto. Any modification or substitution readily conceivable by those skilled in the art within the scope of the technology disclosed herein shall be covered within the scope of the present invention. Therefore, the protection scope of the present invention is subject to the claims.

## Claims

1. An SD card partitioning method, comprising:
creating a management information partition in a storage area of an SD card, and setting an access attribute of the management information partition to a hidden attribute;
dividing a remaining storage area into at least two data partitions; setting access attribute of at least one of the data partitions to a read-only attribute; setting an access attribute of the remaining data partition to a full-access attribute, and using a size of the data partition with the full-access attribute as a storage capacity for use by a user of the SD card; and
storing partition information of the SD card in the management information partition, wherein the partition information comprises: the number of partitions, a size and a start address of each partition, and an access attribute of each partition.

2. The SD card partitioning method according to claim 1, wherein the creating the management information partition in the storage area of the SD card and setting the access attribute of the management information partition to the hidden attribute comprises:
creating a storage partition at a rear end of the storage area of the SD card as the management information partition according to a set capacity.

3. The SD card partitioning method according to claim 1, wherein the dividing the remaining storage area into at least two data partitions comprises:
creating at least two storage partitions in a storage area between a front end of the storage area of the SD card and the age information partition as data partitions.

4. The SD card partitioning method according to claim 1, wherein the setting the access attribute of at least one of the data partitions to the read-only attribute comprises:
setting an attribute of at least one storage partition adjacent to the management information partition in the storage area to a read-only attribute, wherein the storage partition with the read-only attribute serves as a system data partition for storing system data.

5. The SD card partitioning method according to claim 1, wherein the setting the access attribute of the remaining data partition to the full-access attributes, and using the size of the data partitions with the full-access attributes as the storage capacity for use by the user of the SD card comprises:
setting an access attribute of a storage partition, other than storage partition with read-only attribute and the management information partition, in the storage area of the SD card to full-access attribute, wherein the storage partition set to the full-access attribute serve as user data partition for storing user data, and setting a size of the user data partition as the storage capacity available for use by the user of the SD card.

6. SD card partitioning apparatus, comprising:
a capacity querying unit, a partition parameter setting unit, a partition parameter receiving unit, and a partitioning unit, wherein:
the capacity querying unit is configured to query a capacity size of a processed SD card;
the partition parameter setting it is configured to set, according to the capacity of the processed SD card that is obtained by the capacity querying unit, parameters of partitions to be created on the processed SD card, wherein the parameters of the partitions comprise: a capacity of an information management partition and capacities of at least two data partitions; or a capacity and an access attribute of an information management partition and capacities of at least two data partitions and an access attribute of each of the data partitions;
the partition parameter receiving unit is configured to receive the parameters that are of the partitions to be created and are set by the partition parameter setting unit for the processed SD card; and
the partitioning it is configured to partition the processed SD card according to the parameters that are of the partitions to be created and are received by the partition parameter receiving unit, create the management information partition in a storage area of the processed SD card, and set the attribute of the management information partition to a hidden attribute; create the at least two data partitions in the remaining storage area according to the set capacities; set an access attribute of at least one of the data partitions to a read-only attribute; set an access attribute of the remaining data partition to a full-access attribute, and set a size of the data partition with the full-access attribute as a storage capacity for use by a user of the SD card; and store partition information of the SD card into the management information partition, wherein the partition information comprises: the number of partitions, a size and a start address of each partition, and an access attribute of each partition.

7. The SD card partitioning apparatus according to claim 6, wherein the apparatus further comprises:
a partition attribute querying unit, configured to query an original attribute of a partition of the processed SD card.

8. An SD card, wherein a management information partition with an access attribute being a hidden attribute is created in a storage area of the SD card, and the remaining storage area exclusive of the management information partition is divided into at least two data partitions according to set capacities; wherein, an access attribute of at least one of the data partition is a read-only attribute; an access attribute of the remaining data partition is a full-access attribute, and a size of the data partition the full-access attribute is used as a storage capacity for use by a user of the SD card; and the management information partition stores partition information of the SD card, the partition information comprising: the number of partitions, a size and a start address of each partition, and an access attribute of each partition.

9. The SD card according to claim 8, wherein the management information partition is a storage partition, which is located at a rear end of the storage area of the SD card and created according to a set capacity.

10. The SD card according to claim 8, wherein the data partition whose access attribute is a read-only attribute is at least one storage partition adjacent to the management information partition in the storage area of the SD card, wherein the storage partition serves as a system data partition for storing system data.

11. The SD card according to claim 8, wherein the data partition whose access attribute is full-access attribute is storage partition whose start address is between a front end of the storage area of the SD card and the data partition with the read-only attribute, the storage partition serve as user data partitions for storing user data, and a size of the user data partition serves as the storage capacity for use by the user of the SD card.

12. A terminal device, comprising an card interface, and further comprising:
a partition parameter receiving unit and a partitioning it, wherein:
the partition parameter receiving unit is configured to receive parameters for partitioning an SD card connected to the SD card interface, wherein the parameters comprise: a capacity of an information management partition and capacities of at least two data partitions; or a capacity and an access attribute of an information management partition, and capacities of at least two data partitions and an access attribute of each of the data partitions; and
the partitioning unit is configured to partition the processed SD card according to the parameters of the partitions received by the partition parameter receiving unit, create the management information partition in a storage area of the processed SD card, and set the access attribute of the management information partition to a hidden attribute; create at least two data partitions in the remaining storage area according to the set capacities; set an access attribute of at least one of the data partitions to a read-only attribute; set an access attribute of the remaining data partition to a full-access attribute, and set a size of the data partition with the full-access attribute as a storage capacity for use by a user of the SD card; and store partition information of the SD card into the management information partition, wherein the partition information comprises: the number of partitions, a size and a start address of each partition, and an access attribute of each partition.

13. A terminal device, comprising an SD card interface, and further comprising:
a capacity querying unit, a partition parameter setting unit, a partition parameter receiving unit, and a partitioning unit, wherein:
the capacity querying unit is configured to query a capacity size of a processed SD card;
the partition parameter setting it is can to set, according to the capacity of the processed SD card that is obtained by the capacity querying unit, parameters of partitions to be created on the processed SD card, wherein the parameters of the partitions comprise: a capacity of an information management partition and capacities of at least two data partitions; or a capacity and an access attribute of an information management partition and capacities of at least two data partitions and an attribute of each of the data partitions;
the partition parameter receiving unit is configured to receive the parameters that are of the partitions to be created and are set by the partition parameter setting unit for the processed SD card; and
the partitioning unit is configured to partition the processed SD card according to the parameters that are of the partitions to be created and are received by the partition parameter receiving unit, create the management information partition in a storage area of the processed SD card, and set the access attribute of the management information partition to a hidden attribute; create at least two data partitions in the remaining storage area according to the set capacities; set an access attribute of at least one of the data partitions to a read-only attribute; set an access attribute of the remaining data partition to a full-access attribute, and set a size of the data partition with the full-access attribute as a storage capacity for use by a user of the SD card; and store partition information of the SD card into the management information partition, wherein the partition information comprises: the number of partitions, a size and a start address of each partition, and an access attribute of each partition.
